# EUROPÄISCHE PATENTANMELDUNG

(11) **EP 1 764 251 A2**
(43) Veröffentlichungstag der Anmeldung: **21.03.2007**
(21) Anmeldenummer: 06018957.8
(22) Anmeldetag: 11.09.2006
(51) Int. Cl.: B60K 11/04, F01P 3/18, F28F 9/00

(54) **Anordnung zur Befestigung eines Wärmeübertragers in einer Zarge, insbesondere für Kraftfahrzeuge**

(30) Priorität: 20.09.2005 DE 102005044933
(71) Anmelder: Behr GmbH & Co. KG, 70469 Stuttgart (DE)
(72) Erfinder: Assis, Mauro, 70435 Stuttgart (DE); Strese, Thomas, Dipl.-Ing., 70195 Stuttgart (DE)
(74) Vertreter: Mantel, Berthold Friedrich

(57) **Zusammenfassung**

Die Erfindung betrifft eine Anordnung zur Befestigung eines Wärmeübertragers (4) in einer Zarge (2), insbesondere für Kraftfahrzeuge, wobei die Zarge (2) Rahmenwände (2a, 2b) und Befestigungsmittel zur Aufnahme des Wärmeübertragers (4) aufweist.

Es wird vorgeschlagen, dass mindestens ein Befestigungsmittel in der Rahmenwand (2b) angeordnet und als federnde Zunge (9) ausgebildet ist, welche unter elastischer Vorspannung am Wärmeübertrager (4) abstützbar ist.

## Beschreibung

Die Erfindung betrifft eine Anordnung zur Befestigung eines Wärmeübertragers in einer Zarge nach dem Oberbegriff des Patentanspruches 1.

Zargen oder Lüfterzargen werden bei Kühlmodulen oder Kühlmittelkühlern für Kraftfahrzeuge verwendet und dienen einerseits der Führung der von einem Lüfter durch den Kühler oder die Wärmeübertrager angesaugten Kühlluft sowie der Halterung eines Elektromotors, welcher den Lüfter antreibt. Zargen dienen bei Modulen, welche eine Baueinheit von verschiedenen Wärmeübertragern bilden, auch zur Aufnahme und Befestigung der Wärmeübertrager. Hierfür weist die Zarge, welche vorzugsweise als Kunststoffspritzteil ausgebildet ist, einen Rahmen mit angespritzten Befestigungsmitteln auf, wodurch eine einfache Montage der Wärmeübertrager, möglichst ohne weitere separate Befestigungsmittel möglich ist. Bei der Ausbildung der Befestigungsmittel sind verschiedene Gesichtspunkte zu beachten: einerseits soll eine einfache und schnelle Montage der Wärmeübertrager möglich sein, andererseits sollen die Wärmeübertrager möglichst klapperfrei in der Zarge aufgenommen, und schließlich müssen bei der Ausbildung der Lagerstellen temperaturbedingte Dehnungen zugelassen oder fertigungsbedingte Toleranzen der Wärmeübertrager ausgeglichen werden.

Es ist Aufgabe der vorliegenden Erfindung, eine Anordnung zur Befestigung der eingangs genannten Art zu schaffen, welche eine einfache und schnelle Montage, eine spielfreie Befestigung auch bei toleranzbedingten Maßabweichungen und eine dehnungsgerechte Aufnahme in der Zarge erlaubt.

Diese Aufgabe wird durch die Merkmale des Patentanspruches 1 gelöst Vorteilhafte Ausgestaltungen der Erfindung ergeben sich aus den Unteransprüchen.

Erfindungsgemäß ist in einer Rahmenwand der Zarge eine federnde Zunge angeordnet, welche sich unter Vorspannung am Wärmeübertrager abstützt. Damit wird der Vorteil erreicht, dass einerseits toleranzbedingte Maßabweichungen des Wärmeübertragers und andererseits im Betrieb auftretende temperaturbedingte Dehnungen kompensierbar sind.

Nach einer bevorzugten Ausführung ist die federnde Zunge etwa rechteckförmig ausgebildet und nur an einer Seite (Biegekante) mit der Rahmenwand verbunden, so dass die Zunge als Biegefeder wirkt. Die Zunge weist ferner eine parallel zur Biegekante verlaufende Abstützkante auf, welche mit einer Abstützsicke am Wärmeübertrager derart zusammenwirkt, dass ein Gelenk gebildet wird. Bei einer Ausdehnung des Wärmeübertragers bzw. einem damit verbundenen Einfedern der Zunge in Richtung Rahmenwand bleibt der gelenkige Kontakt zwischen Zunge und Wärmeübertrager erhalten. Die Abstützkante, welche die Kante eines Absatzes in der Zunge bildet, bewirkt gleichzeitig eine Fixierung des Wärmeübertragers in Fahrtrichtung des Kraftfahrzeuges.

Nach einer bevorzugten Ausbildung ist die Abstützsicke in einem als Hohlprofil ausgebildeten Seitenteil des Wärmeübertragers eingeformt. Damit ergibt sich eine formsteife Ausbildung der gelenkigen Abstützung zwischen Wärmeübertrager und zargenfester Zunge.

Vorteilhafterweise ist der Wärmeübertrager als Kühlmittelkühler eines Kühlmoduls ausgebildet, dessen Rohre parallel zu den Seitenteilen, d. h. im eingebauten Zustand des Kühlmoduls in senkrechter Richtung verlaufen. Die erfindungsgemäße Ausbildung der Zunge in Verbindung mit dem Seitenteil des Kühlers erlaubt eine einfache Montage durch Einschieben des Kühlers in die Zarge, wobei die Zunge zunächst einfedert und nach Erreichen der Endposition des Kühlers in der Zarge zurückfedert, so dass die Abstützkante in Eingriff mit der Abstützsicke kommt.

Ein Ausführungsbeispiel der Erfindung ist in der Zeichnung dargestellt und wird im Folgenden näher beschrieben. Es zeigen
- Fig. 1: einen horizontalen Schnitt durch ein Kühlmodul mit Kühlmittelkühler,
- Fig. 2a: eine Einzelheit E aus Fig. 1 mit Normalmaß des Kühlmittelkühlers,
- Fig. 2b: die Einzelheit E mit Maximalmaß des Kühlmiftelkühlers und
- Fig. 3: einen Ausschnitt einer Rahmenwand mit federnden Zungen.

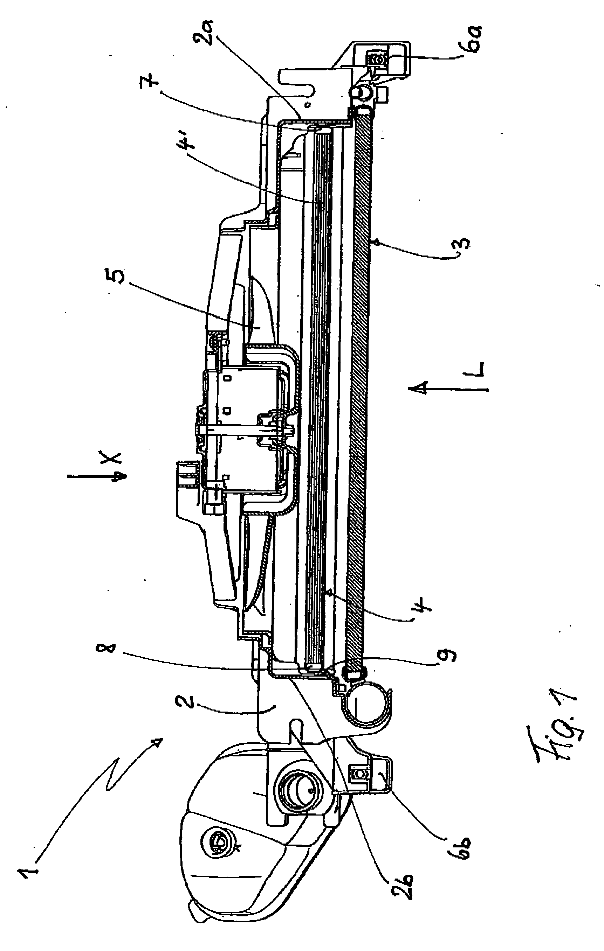

**Fig. 1** zeigt ein Kühlmodul 1 zum Einbau in ein nicht dargestelltes Kraftfahrzeug in einem Horizontalschnitt. In einer rahmenartig ausgebildeten Zarge 2 sind zwei Wärmeübertrager, ein Kondensator 3 sowie ein Kühler 4, und ein Kühlgebläse 5 aufgenommen. Das Kühlmodul 1 wird über an der Zarge 2 befestigte Lager 6a, 6b im nicht dargestellten vorderen Motorraum des Kraftfahrzeuges abgestützt. Die Wärmeübertrager 3, 4 werden von Luft in Richtung des Pfeiles L durchströmt, welche durch das Kühlgebläse 5 gefördert wird. Die Fahrtrichtung des Kraftfahrzeuges ist durch einen Pfeil X gekennzeichnet. Der Kühler 4 ist als so genannter Fallstromkühler in der Zarge 2 eingebaut, d. h. seine nicht dargestellten, von Kühlmittel durchströmten Rohre verlaufen etwa senkrecht, d. h. senkrecht zur Zeichenebene. Die nicht dargestellten Rohre bilden mit ebenfalls nicht dargestellten Rippen einen Block 4', welcher durch Seitenteile 7, 8 abgeschlossen und gegenüber senkrecht verlaufenden Rahmenwänden 2a, 2b der Zarge 2 abgestützt ist. Während die in der Zeichnung rechts dargestellte Seite 7 des Kühlers 4 fest gelagert ist, wird die linke Seite mit dem Seitenteil 8 elastisch abgestützt, und zwar über eine federnd ausgebildete, aus der Zargenwand 2b ausgeformte Zunge 9, welche mit Vorspannung am Seitenteil 8 anliegt. Zarge 2, Rahmenwände 2a, 2b sowie die Zunge 9 sind vorzugsweise einstückig als Kunststoffspritzteil herstellbar.

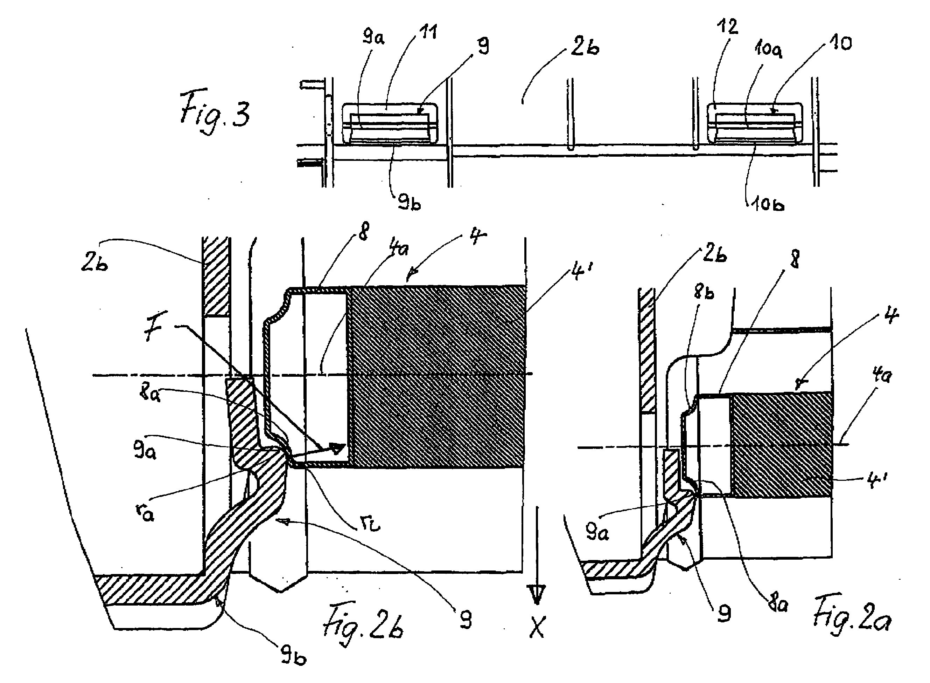

**Fig. 2a** und **2b** zeigen jeweils eine Einzelheit E aus Fig. 1. Fig. 2a zeigt den Kühler **4** mit einer Querachse 4a in seiner normalen Abmessung bezüglich seiner Querachse 4a. Das am Block 4' befestigte Seitenteil 8 ist als kastenförmiges Hohlprofil ausgebildet und weist in seinen außen liegenden Eckbereichen senkrecht zur Zeichenebene verlaufende Sicken 8a, 8b auf. Die fedemd ausgebildete Zunge 9 weist eine abgesetzte Abstützkante 9a auf, welche in die Sicke 8a (Abstützsicke) eingreift und unter Vorspannung am Hohlprofil 8 anliegt.

Fig. 2b zeigt den Kühler 4 in einer maximalen Abmessung in Richtung seiner Querachse 4a, beispielsweise hervorgerufen durch eine temperaturbedingte Dehnung des Blockes 4'. Das Seitenteil 8 hat sich in der Zeichnung nach links bewegt und über die Abstützsicke 8a die Zunge 9 nach links (in der Zeichnung) gedrückt. Die Zunge 9, welche im Bereich einer Biegekante 9b mit der Rahmenwand 2b verbunden ist, macht dabei eine Schwenkbewegung um die Biegekante 9b. Dabei wandert die Abstützkante 9a etwa auf einem Kreisbogen nach oben und gleitet dabei in der Abstützsicke 8a. Die Abstützkante 9a ist durch einen Außenradius rₐ abgerundet, und die Abstützsicke weist einen Innenradius rᵢ auf, welcher größer als der Außenradius rₐ der Abstützkante 9a ist. Damit ist sichergestellt, dass bei einer Dehnung und anschließender Kontraktion des Kühlers 4 in Richtung seiner Querachse 4a der Eingriff von Abstützkante 9a und Abstützsicke 8a erhalten bleibt. Die aus der Abstützung resultierende Abstützkraft auf den Kühler 4 ist durch einen Pfeil F dargestellt.

Die Fahrtrichtung des Kraftfahrzeuges ist durch den Pfeil X dargestellt. Der Kühler 4 wird entgegen der Fahrtrichtung X in die Zarge 2 eingesetzt, wobei zunächst die Sicke 8b (vgl. Fig. 2a) an der Zunge 9 aufgleitet und diese nach innen, in Richtung Zargenwand 2b drückt. Nach Erreichen der in Fig. 2a dargestellten Endposition schnappt die Zunge 9 zurück und greift mit ihrer Abstützkante 9a in die Abstützsicke 8a ein. Damit ist der Kühler 4 fertig montiert und in Fahrtrichtung X sowie quer zur Fahrtrichtung X elastisch fixiert. Temperaturbedingte Dehnungen während des Betriebes können somit durch nachgiebiges Folgen der Zunge 9 kompensiert werden.

**Fig. 3** zeigt eine Ansicht auf die Rahmenwand 2b, in welcher die Zunge 9 und eine weitere Zunge 10 gleicher Ausbildung angeordnet sind. Die Zungen 9, 10 sind etwa rechteckförmig ausgebildet, weisen jeweils eine Abstützkante 9a, 10a auf und sind jeweils nur über eine Seite 9b, 10b, d. h. die Biegekante mit der Rahmenwand 2b verbunden. An den übrigen drei Seiten sind die Zungen 9 und 10 durch einen Spalt 11, 12 frei gespart. Die Zungen 9 und 10 sind somit biegeelastisch verformbar. Sie sind in ihren Federwegen an die Toleranzabweichungen und Dehnungen des Kühlers 4 in Richtung seiner Querachse 4a angepasst, so dass stets eine Vorspannung im elastischen Bereich erhalten bleibt.

Abweichend von dem oben beschriebenen Ausführungsbeispiel ist die erfindungsgemäße biegeelastische Zunge auch als Abstützelement für andere Wärmeübertrager einsetzbar, um toleranzbedingte Maßabweichungen und betriebsbedingte Dehnungen zu kompensieren.

## Patentansprüche

1. Anordnung zur Befestigung eines Wärmeübertragers (4) in einer Zarge (2), insbesondere für Kraftfahrzeuge, wobei die Zarge (2) Rahmenwände (2a, 2b) und Befestigungsmittel zur Aufnahme des Wärmeübertragers (4) aufweist, **dadurch gekennzeichnet, dass** mindestens ein Befestigungsmittel in der Rahmenwand (2b) angeordnet und als federnde Zunge (9) ausgebildet ist, welche unter elastischer Vorspannung am Wärmeübertrager (4) abstützbar ist.

2. Anordnung nach Anspruch 1, **dadurch gekennzeichnet, dass** die Zunge (9) etwa rechteckförmig ausgebildet, an drei Seiten (11) aus der Rahmenwand (2b) freigespart und an einer Seite (9b) mit der Rahmenwand (2b) verbunden, insbesondere einstückig ausgebildet ist.

3. Anordnung nach Anspruch 1 oder 2, **dadurch gekennzeichnet, dass** die Zunge (9) eine Abstützkante (9a) und der Wärmeübertrager (4) eine Abstützsicke (8a) aufweisen und dass die Abstützkante (9a) mit der Abstützsicke (8a) ein Abstützgelenk bildet.

4. Anordnung nach Anspruch 3, **dadurch gekennzeichnet, dass** der Wärmeübertrager (4) ein Hohlprofil (8) aufweist, in welches die Sicke (8a) eingeformt ist.

5. Anordnung nach Anspruch 4, **dadurch gekennzeichnet, dass** das Hohlprofil (8) ein Seitenteil des Wärmeübertragers (4) bildet.

6. Anordnung nach einem der Ansprüche 1 bis 5, **dadurch gekennzeichnet, dass** in der Rahmenwand (2b) zwei Zungen (9, 10) im Abstand zueinander angeordnet und mit ihren Abstützkanten (9a, 10a) in der Abstützsicke (8a) des Hohlprofils (8) gelenkig abstützbar sind.

7. Anordnung nach einem der Ansprüche 3 bis 6, **dadurch gekennzeichnet, dass** die Abstützkante (9a) einen Außenradius rₐ und die Abstützsicke (8a) einen Innenradius rᵢ aufweisen, wobei tᵢ > rₐ ist.

8. Anordnung nach einem der Ansprüche 1 bis 7, **dadurch gekennzeichnet, dass** der Wärmeübertrager als Kühlmittelkühler (4) ausgebildet ist.

9. Anordnung nach einem der vorhergehenden Ansprüche, **dadurch gekennzeichnet, dass** der Wärmeübertrager bzw. Kühlmittelkühler (4) entgegen der Fahrtrichtung X in die Zarge (2) einsetzbar und durch die mindestens eine Zunge (9, 10) in Fahrtrichtung fixierbar ist.
